# EUROPEAN PATENT APPLICATION

(11) **EP 4 663 262 A1**
(43) Date of publication of application: **17.12.2025**
(21) Application number: 25180445.6
(22) Date of filing: 03.06.2025
(51) Int. Cl.: A63F 13/40, G06F 3/023, G06F 3/04842, G06F 3/0487

(54) **INPUT SYSTEM AND METHOD**

(30) Priority: 13.06.2024 GB 202408477
(71) Applicant: Sony Interactive Entertainment Inc., Tokyo 108-0075 (JP)
(72) Inventor: LEUNG, Jun Yen, London, W1F 7LP (GB)
(74) Representative: D Young & Co LLP

(57) **Abstract**

An input system, comprises an entertainment device comprising an input processor configured to receive inputs from a handheld controller; wherein the input processor is configured to map only a subset of the letters of the alphabet to respective inputs received from the handheld controller; and wherein the subset of letters was selected responsive to their ability to discriminate between words in a corpus.

## Description

### BACKGROUND OF THE INVENTION

### Field of the invention

The present invention relates to an input system and method.

### Description of the Prior Art

Unlike traditional computers, which have a keyboard as a primary input, most videogame consoles rely on a handheld controller (or occasionally two) as the primary input to the device. For most applications, such as menu navigation and selection, and playing games, this is ideal and allows for a conveniently handheld form factor for the user.

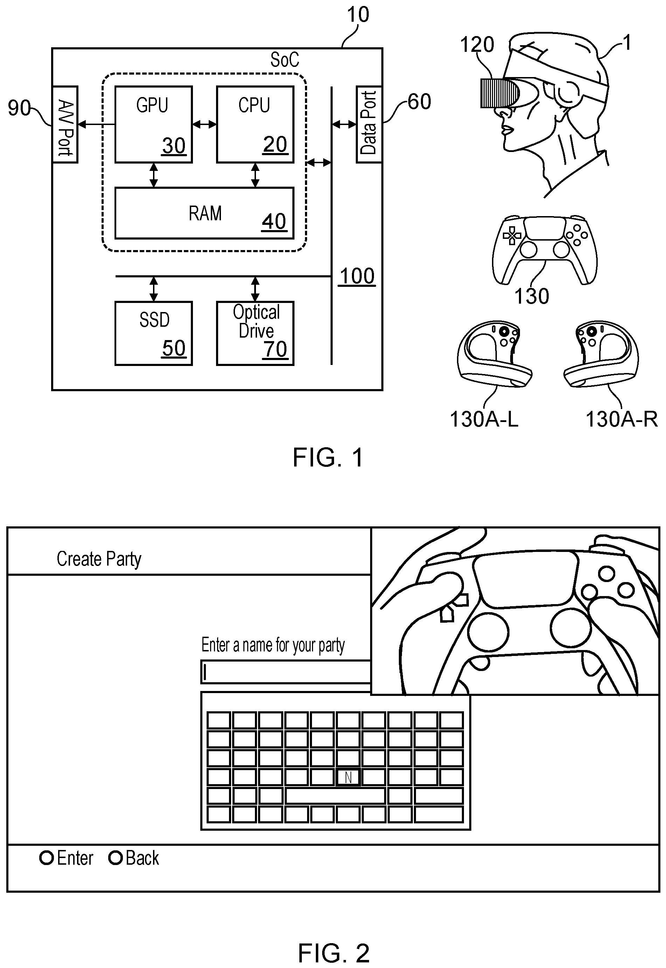

However, on occasion it is necessary to input text - for example when logging into an account. However, in the absence of a physical keyboard, the handheld controller is typically limited to navigating a virtual keyboard, which in effect replicates existing menu navigation to select letters and numbers as seen in Figure 2. This is an inefficient and cumbersome solution, that may be tolerable for occasional short inputs, but is less fit for social interactions within multiplayer environments, for example in order to hold virtual conversations.

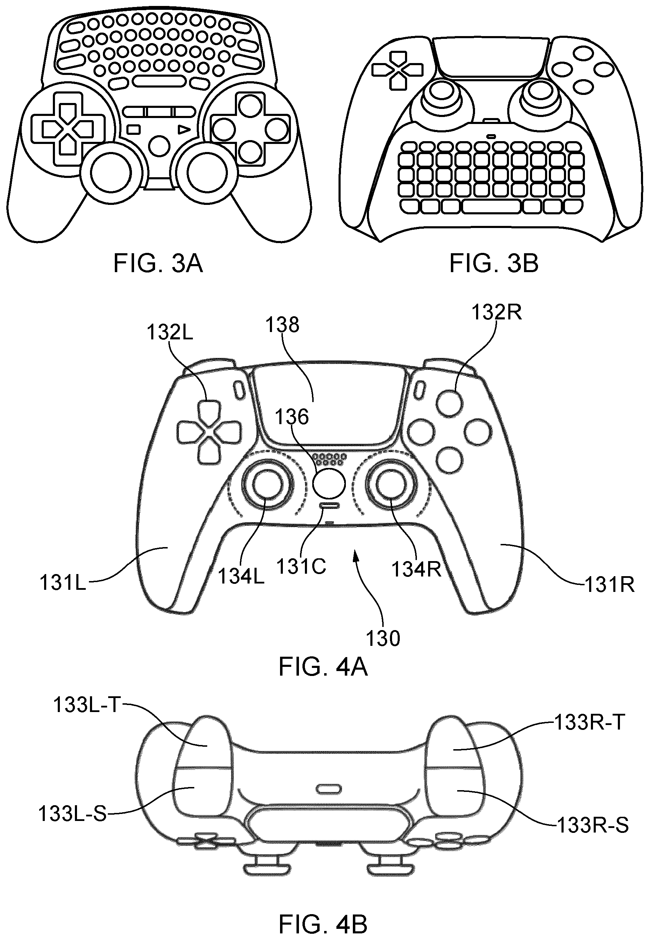

To accommodate this, miniature keyboards have been provided to clip on to handheld controllers. Typically these mini keyboards draw power from the host controller, for example via its USB port. However, in addition to being very small, these keyboards are also ergonomically limited by the existing physical input and structural requirements of the host controller. Hence for example a keyboard may be attached so as to sit above the controller, as in Figure 3A, enabling thumb-based typing. However, if the controller has a touch surface on the upper half of its body, this may not be a viable solution and so the keyboard may have to fit below the main controller body between the handles, as per Figure 3B.

In addition, this represents an additional element of hardware needed to overcome a user interface issue, and also represents an additional drain on the controller battery when the keyboard is not in use, as well as an impact on the balance and ergonomics of the controller itself.

Accordingly, there is a need for an improved input system and method.

Embodiments of the present invention seek to address or mitigate this need.

### SUMMARY OF THE INVENTION

Various aspects and features of the present invention are defined in the appended claims and within the text of the accompanying description.

In a first aspect, an input system is provided in accordance with claim 1.

In another aspect, a method identifying an input is provided in accordance with claim 13.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an input system in accordance with embodiments of the present description.
- Figure 2 is an illustration of a virtual keyboard known in the art.
- Figures 3A and 3B are illustrations of physical mini keyboards known in the art.
- Figures 4A and 4B are schematic views of a handheld controller in accordance with embodiments of the present description.
- Figure 5 is a Python code listing of a letter assessment process in accordance with embodiments of the present description.
- Figures 6A-D are schematic diagrams of input maps in accordance with embodiments of the present description.
- Figures 7A and 7B are schematic diagrams of a user interface in accordance with embodiments of the present description.
- Figure 8 is a flow diagram of a method of identifying an input in accordance with embodiments of the present description.

### DESCRIPTION OF THE EMBODIMENTS

An input system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Referring now to the drawings, wherein like reference numerals designate identical or corresponding parts throughout the several views, Figure 1 shows an example of an input system, in the form of an entertainment system 10 such as a computer or console, operating in conjunction with one or more handheld controllers 130, and/or one or more VR controllers (130A-L,R) in the case of an head mounted display 'HMD'.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50.

The entertainment device may transmit or receive data via one or more data ports 60. It may also optionally receive data via an optical drive 70.Audio/visual outputs from the entertainment device are typically provided through one or more A/V ports 90 or one or more of the data ports 60. Where components are not integrated, they may be connected as appropriate either by a dedicated data link or via a bus 100.

An example of a device for displaying images output by the entertainment system is a head mounted display 'HMD' 120, worn by a user 1. Other examples include a television or monitor.

Referring now to Figures 4A and 4B, interaction with the system is typically provided using the handheld controller 130. Such a controller typically has two handle sections 131L,R and a central body 131C. Various controls are distributed over the controller, typically in local groups. Examples include a left button group 132L, which may comprise directional controls, and similarly right button group 132R, which comprise function controls. The controller also includes left and/or right joysticks 134L,R, which may optionally also be operable as buttons by pressing down on them. The controller may also comprise top buttons 133L,R, including shoulder buttons 133L-S,R-S and trigger buttons 133L-T,R-T.

The controller (typically in the central portion of the device) may also comprise one or more system buttons 136, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 138, a light for optical tracking (not shown), a screen (not shown), haptic feedback elements (not shown), and the like. It will be appreciated that whilst the controller of Figures 4A,B is used herein as an example, other controllers such as VR controllers 130AL,R may be similarly considered.

As noted elsewhere herein, traditionally a controller is used to navigate a virtual keyboard when inputting text or alphanumeric data.

In principle, some controllers (including those shown in Figures 4A and 4B) have sufficient inputs to indicate 26 characters; for example each joystick may be used to indicate 8 letters using cardinal and ordinal directions (for a total of 16), the button groups 132L,R can indicate a further 8, and the shoulder buttons the final 2. The right and left trigger buttons could then for example indicate a space and a delete respectively.

However, this would be physically complicated to interact with, and also leaves limited inputs available to select for example between upper and lower case letters, numbers, or punctuation.

Accordingly, in embodiments of the present description an alternative input scheme is based on the use of a limited number of discriminatory letters.

Reducing the number of available letters to, for example, sixteen, would allow them to be uniquely indicated by just the two joysticks. This could enable a user to learn to use the joysticks as text inputs, developing muscle-memory over time in a manner akin to typing.

The letters to remove may be based on their ability to discriminate words. For example, if there was a language that only consisted of two the words {"store", "stare"}, then in this language the letters "s", "t", "r", and "e" have no discriminatory power to differentiate between the words as they are common to both. Only the letters "o" and "a" are discriminative, and it would be possible to select between all the words in this language using only these two letters (or indeed, only one of them if the input scheme was suitably arranged).

In a language that consists of many more words (e.g. 10,000), then it will be appreciated that most if not all of the letters in their alphabet can be used to discriminate between at least two words. However, the letters with the smallest discriminatory ability may be preferably removed first. Their discriminatory ability will typically be a function of both their use and frequency within a corpus of words.

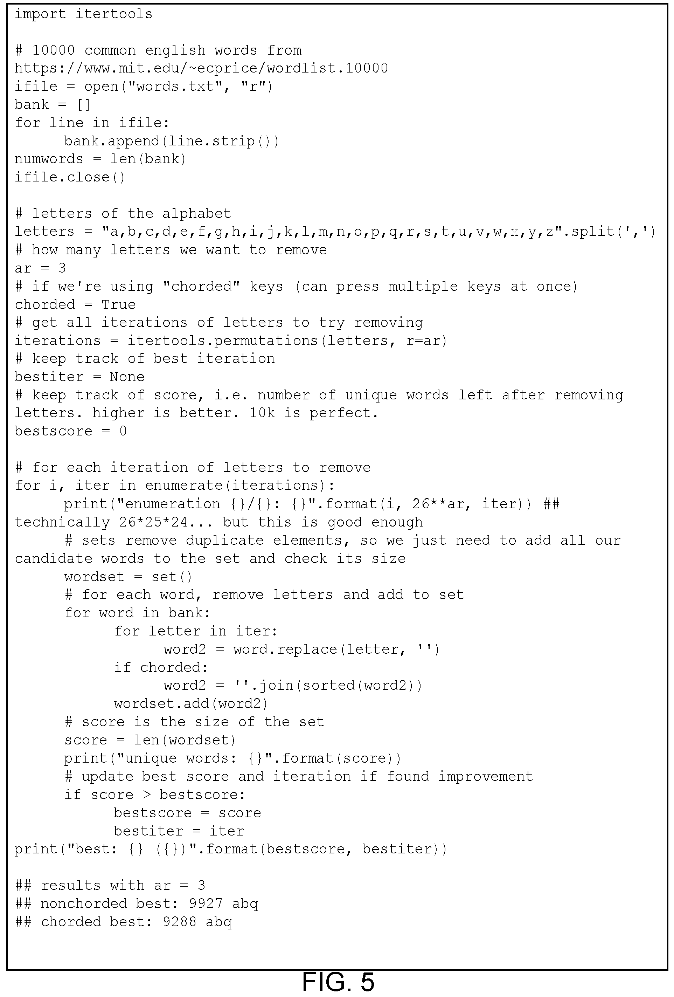

Removing N letters from the alphabet, in substantially the order of least discriminatory ability, will progressively reduce the number of words that can be uniquely identified using the remaining letters. Example code for selecting N letters for such a purpose is provided in Figure 5.

Hence in a first instance, N may be a relatively small number such as N=2, 3, or 4, so that the number of remaining letters can be identified using a subset of the inputs on the controller (e.g. the two joysticks and the two button groups), whilst some or all of the shoulder and trigger buttons are freed up to select upper/lower case, letters/numbers, space, and delete, for example.

For a test corpus of 10,000 words for example, for N=3 removing the letters "j", "q", and "z" leaves 9,927 of the original 10,000 words uniquely identifiable by typing the remaining letters as normal.

Meanwhile for N=10, for the same text corpus around 8,800 - 8,900 of the original 10,000 words can be uniquely identified, depending on the letters deleted.

Optionally, and as a non-limiting example, the letters can be any ten from the list comprising:
C, F, H, U, G, M, W, B, K, V, Y, J, Q, X, Z, P

More preferably, the letters can be any ten from the list comprising:
G, M, W, B, K, V, Y, J, Q, X, Z, P

More preferably, as a non-limiting example the letters can be these ten:
W, B, K, V, Y, J, Q, X, Z, P

However, these lists are for a corpus of 10,000 common words in US English. In practice, the popularity and distribution of words used within the context of inputs to a videogame console will likely be different to those in this corpus, or even in normal conversational use.

The popularity of such words can be gauged from existing typed conversations within the context of video game play (for example suitably anonymised, or optionally anonymised to within demographic groups based on age and/or gender). These may be conversations typed using the existing virtual keyboards, and/or may be obtained from players on other platforms such as PC, which have physical keyboards, as this is more likely to be representative of the language users would prefer to use if not limited by the current modes of input. Similarly transcripts of voice chat may be used. A subset of N letters with the lowest or close to the lowest discriminatory capability for that corpus may then be determined.

Further strategies for letter selection are described elsewhere herein.

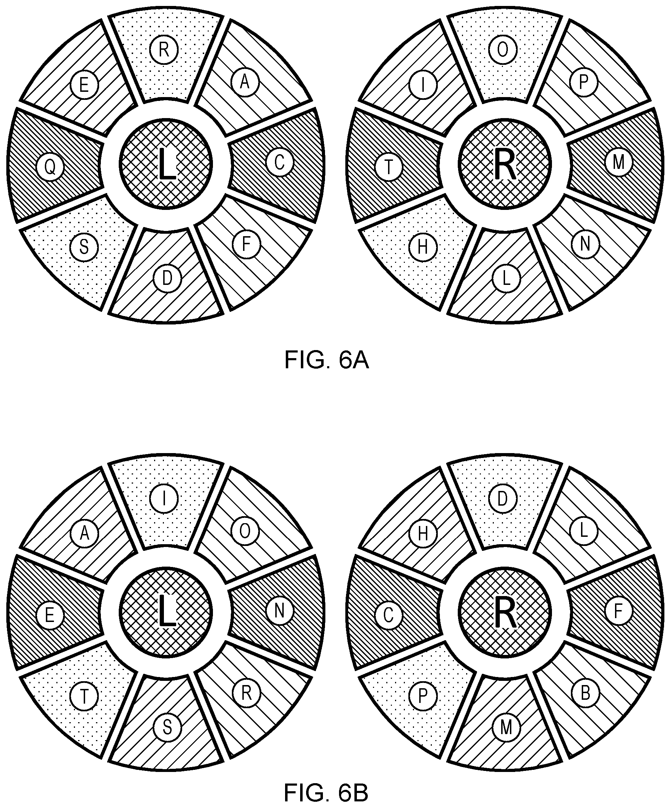

Referring now to Figures 6A-D, strategies for letter distribution on the handheld controller are considered. For instance, the remaining 16 letters (in this example where N=10) can be organised with respect to the left and right joysticks in a number of ways. The letters used in these figures are exemplary only.

Figures 6A-D are exemplary only illustrations of a possible graphical UI, for example replacing the virtual keyboard of Figure 2. They depict the left and right joysticks (illustrated with hatched circles marked L and R), and the letters associated with each ordinal or cardinal direction.

Figure 6A roughly maps the positions of the remaining QWERTY letters on to the 8 ordinal and cardinal positions of each joystick, so that Q, E, and R are top left, and N, M are bottom right. Clearly other keyboard layouts, such as Dvorak, may be similarly be considered.

Figure 6B places the most common letters on the left joystick and the less frequent letters on the right; this can help with co-ordination and muscle-memory. Clearly different letter frequencies will be appropriate for different languages and/or corpora. A variant of this places the letters with the highest discriminatory capability on the left and the remainder (excluding the N lowest) on the right.

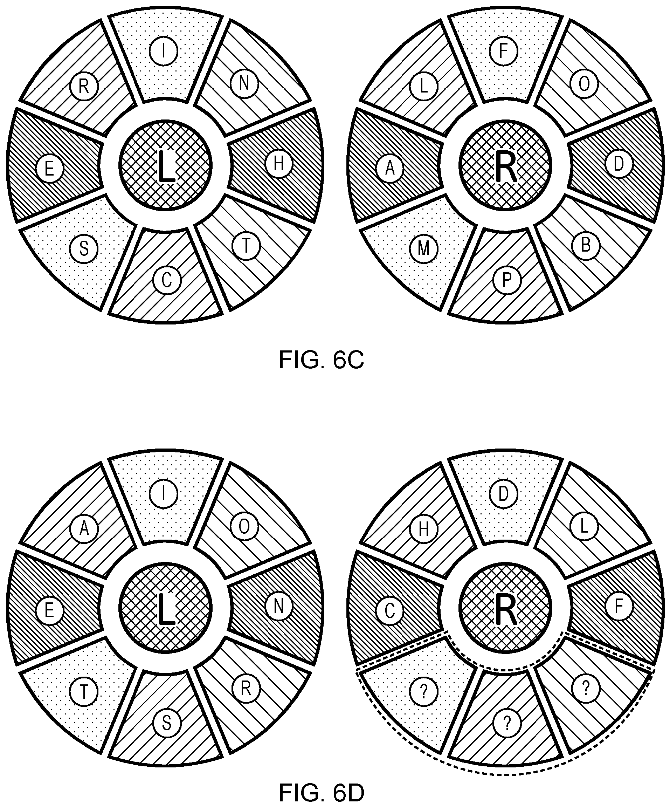

Figure 6C places letters according to common letter pairings; hence ER, IN, S(C,T, or H); and less frequently A(L or F), OD, M(P or B). This helps with input speed. Clearly different combinations will be appropriate for different languages.

In all the above cases it may be appreciated that some modifications may be considered, such as grouping the vowels together, for ease of recall and habituation by the user.

It will also be appreciated that a user may choose to configure their own mapping, or other mapping schemes may be considered, for example with soft vowels and consonants on one joystick and plosives and harder consonants on the other.

In each case, the letter can be indicated using the joystick, and actually selected using any appropriate mechanism, including holding the joystick in that position for a predetermined period, pushing down on the joystick (if it has such an input), and/or pressing another button such as a shoulder or trigger button.

It will be further appreciated that where N<10, other buttons may be assigned to the additional letters, or in principle the number of one or more joystick directions could be increased, e.g. to point to 9, 10, 11, 12, etc. letter options (although this tends to be more difficult for users to accurately control, and 8 directions is preferred).

Regardless of the number N chosen, and hence the allocation of letters to inputs of the controller, several letter selection principles may optionally be considered.

The selection and optionally positioning of letters may be based on the discriminatory ability of the letters within a global language corpus, or a corpus for a particular language and/or country.

Alternatively or in addition, as noted elsewhere herein such a corpus may be derived from chat (from controllers, keyboards, and/or transcribed voice chat) on the entertainment device. The corpus may be further derived from different usage scenarios, such as different games or game genres, or different modes of use of the entertainment device.

Referring now also to Figure 6D, whilst the letters may stay static in relation to the joysticks and/or other inputs of the controller, optionally some or all of them can be updated dynamically; for example a different set of letters may better distinguish words when used at the start of a word than at the middle or end of a word, for example due to the tendency to have more consonants at the start and end of words (and potentially different subsets of consonants - for example D, G, and S being common ending letters). Alternatively, one or more buttons in one of the other input groups (e.g. 132L,R) could be dynamically allocated to letters, so that the muscle memory for static mappings on the joysticks can remain wholly consistent.

Hence for example one section of the joystick inputs could be given over to dynamic suggestions of letters that are more likely at the current position in a word than those already available elsewhere in the joystick selection; these would replace the letters within a specific region (denoted in Figure 6D by dotted lines), for example those currently least likely but originally included. As noted above, alternatively these could be allocated to one or more other buttons of the controller. Whilst this provides more inputs overall, it means the user must disengage from at least one of the joysticks to select a button.

In any event, such an approach may also be used based on statistics between letters (i.e. predicting most likely next letters and including them if not currently available), and this may extend to the letter or letters of a next word based on letters or whole words from a previous word or words.

It will be appreciated that a mix of static letter and contextual letter suggestions advantageously allows for familiarity and muscle memory to develop whilst also increasing the number of available letters to select from.

Where the choice of 'N' provides available spare inputs, then optionally a 'blank' button (e.g. one of the shoulder or trigger buttons) could be used to denote a gap where a desired letter is not shown. This can assist the system in guessing the next letter, or guessing the word, as the gap indicates one of N missing letters. Whilst they are the letters with the least overall discriminatory power, this does not mean they have no discriminatory power, nor that they might be useful for a specific word. Alternatively, a user can simply omit missing letters; where this results in ambiguity between possible words, the user can select between them as described later herein.

In a similar manner, alternatively or in addition a 'swap' button (e.g. one of the shoulder or trigger buttons) could be used to swap one set of letters with most or all of the currently missing letters - for example the letters associated with the right joystick could be swapped for the next 8 letters judged to have lower discriminatory power. This could be a toggle, or more likely akin to a shift function, only occurring whilst the button was pressed.

A similar swap function could be provided to select between upper and lower case, or to switch to numbers or symbols. For example pressing the left joystick down in the neutral/central position could summon numbers and associated symbols such as £, $, %, =, and the like, and pressing it again could revert to the letters. Similarly pressing the right joystick down in the neutral/central position could summon other symbols such as the @, ?, !, and other functional / grammatical symbols or accented letters.

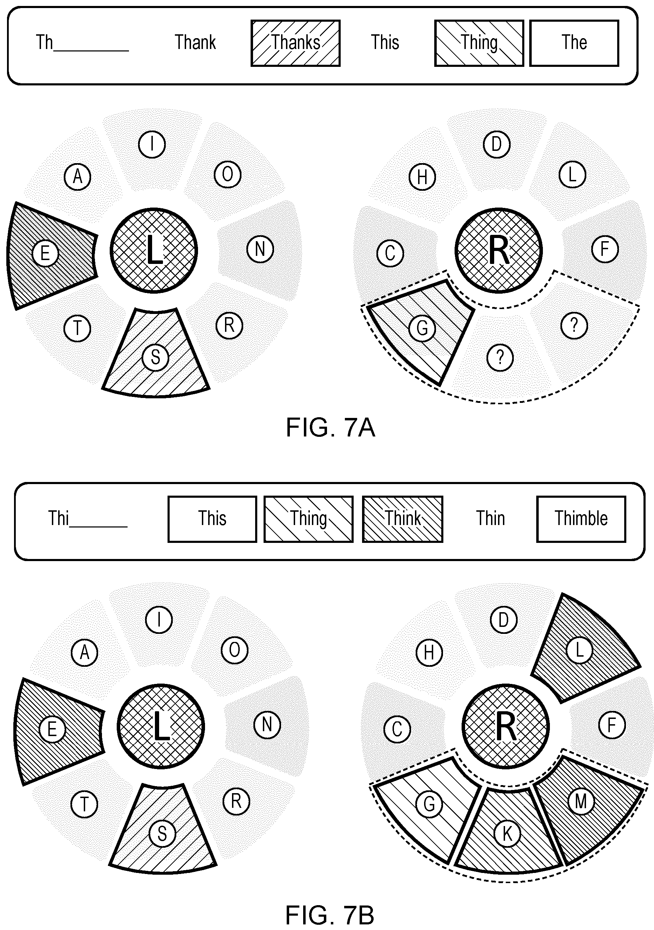

Referring now also to Figures 7A-B, it will be appreciated that a virtual UI of this kind may include word suggestions as the user types. These suggestions may be based on any suitable technique, including based on preceding words in a sequence and the letters (and optionally in the present case, blanks) input for the word so far.

Hence referring now to Figure 7A, a user has entered the letters 'Th', and the system predicts the following five words as possible options: Thank, Thanks, This, Thing, The. Within these suggestions, the letters a and i distinguish plural groups (and one of them will likely be the next letter to be input, unless the user is about to type 'then', for example). However, the letters s, g, and e would uniquely identify a word immediately.

Hence optionally letters that would uniquely identify a word immediately can be highlighted, for example by colour-coding them to match the word, as shown in Figure 7A. In this example, one of the letters ('g') that can discriminate a word is not in the static list, and so has been added to an optional dynamic listing area of the inputs.

In this case, the user can then select the word by selecting the corresponding letter. Optionally, rather than using the letter selection input discussed previously herein, a word selection input is used; for example a shoulder or trigger button that denotes a 'space' can also denote selecting the indicated word. Hence if the user highlights 'e' and then selects 'space', then the system completes the word. Meanwhile if the user highlights 'e' and then presses letter select, the system assumes there is more to the word (and for example suggests Then, There, They, etc). They may then either input another letter, select another word highlighted using the same technique, or indeed press space to indicate that 'The' was the intended word.

Referring now to Figure 7B, supposing that instead user has typed an 'i'. This eliminates Thank, Thanks, and The from consideration, and the system now predicts the most likely words are This, Thing, Think, Thin, Thimble. In this case, the word 'This' is uniquely distinguishable by 's', the word 'thing' by 'g', the word 'think' by 'k', and the word 'thimble' by each of m, b, l, and e. In this case, the 'l' and the 'e' are already in the static list. Meanwhile 'g' and 'k' have been added, and the last available slot is in this example is populated by 'm', given that m or b could have been chosen but m is more often capable of discrimination in the example corpus.

Hence again the user can select a word or a letter using the techniques disclosed elsewhere herein.

Alternatively or in addition to the above, the suggested words could be associated with icons corresponding to some or all of the buttons in groups 132L, R, so that the user could select words directly in this manner. However this would involve moving thumbs from the joystick to these keys, which adds some complexity to the input. Nonetheless this may be useful for example in the case where the user simply omits letters (optionally because they were not presented via the UI or because the user miss-input the letters) , but this results in ambiguity. For example if the user had typed 'thnk', then the system may suggest 'thank' and 'think', and provide two icons corresponding to two physical buttons to select between them. Optionally the joystick(s) may alternatively or in addition be used for this purpose.

In a case where a user had input a blank, or skipped an omitted letter, then if there are several candidate words that fit the input sequence, the system provides the best fit suggestions in a manner similar to a spell checker, either once the word is completed and/or as it is being typed, in a similar manner to the predictions above. The correct word can then be selected in a similar manner to that outlined above.

In any event, the techniques herein provide an alternative mechanism to navigating a virtual keyboard by a controller, or accessing a physical keyboard, providing an intuitive user interface that users can learn to use to input text quickly.

### Variant Embodiments

Determining the best combination of letters to remove from a corpus of words is an exponential task as the number of letters to remove increases.

However, several approaches to approximate the best combination may be considered.

The first approach is to find the best combination of, for example, 3 letters to remove. Then clamp these three, and cycle through the remainder to identify the fourth best to remove, and so on up to N. This will provide a good approximation, but may miss some collocations of letters (e.g. "u" has limited discriminatory power in words comprising "q" in English, as "u" almost always follows "q"), depending on the order of letter exclusion.

Another approach is to find the top M combinations of, for example, 3 letters to remove, where M is the number of combinations needed to identify N unique letters within these identified sets of three.

A similar approach runs, for example 100 combinations of 3 letters to remove, and then selects the N most often removed letters.

A combined approach runs a large set of combinations (but not necessarily all) and identifies a top P combinations of 3 letters to remove within that set, then selects the N most often removed letters within those P combinations.

The above schemes are evidence-based (in other words, based on actual tests of the letters in the relevant corpus of words). However, other more approximate approaches are possible for example based on letter frequency in the corpus, where, all else being equal, the letters with the least frequency will have close to the lowest impact on the discriminatory ability of the remaining letters to uniquely identify words in the corpus. Such an approach may be useful as a computationally low cost means of selecting letters from a candidate set based on an individual user's text history; for example the system may provide a list of the N+2 least discriminatory letters in a more general corpus, and allow the local system to select the least frequent N of these in the individual user's text history, where +2 is a non-limiting example.

Again a combination of these approaches may also be used, for example identifying a top P combinations of 3 letters to remove and then selecting the first N letters encountered which also have the lowest frequency in the corpus.

In another variant, alternatively or in addition to determining the best combination of letters to remove using any of the techniques herein, the system does not assume an even distribution or weighting of words themselves. Rather, words have a ranking or weighting based on their frequency within the corpus (or within a wider language corpus), so that for example the ability to distinguish the word 'the' is more important that the ability to distinguish the word 'hen', for example. The scoring of candidate letters is then responsive to this ranking or weighting so that letters that help distinguish high ranking/frequent words are more important than those that distinguish lower ranking words. This helps to ensure that the most commonly needed letters in normal communication are included, rather than the letters that merely distinguish the most different words, which is likely to be an overlapping but not identical set.

In another variant, references herein to the joysticks may be replaced with references to the button groups 132L,R - in this case the eight inputs referred to elsewhere herein can be obtained by pressing one button to indicate a cardinal direction, and two neighbouring buttons to indicate an ordinal direction. This can remove the need for pointing accuracy with the joysticks, and potentially increase input speed if users learn to rock their thumbs in the relevant directions over these keys.

Hence more generally references to joysticks herein can be understood to be references to directional inputs, such as joysticks or the button groups when interpreted as outlined above.

### Summary

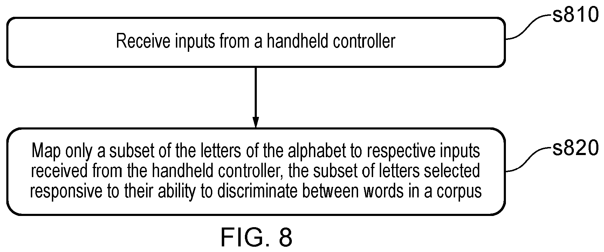

Referring now to Figure 8, in a summary embodiment of the present description a method of identifying an input comprises the following steps.

In a first step s810, receiving (for example at an entertainment device 10) inputs from a handheld controller, as described elsewhere herein.

In a second step s820, mapping only a subset of the letters of an alphabet (e.g. English, or others) to respective inputs received from the handheld controller, as described elsewhere herein, wherein the subset of letters was selected responsive to their ability to discriminate between words in a corpus, as described elsewhere herein.

It will be apparent to a person skilled in the art that variations in the above method corresponding to operation of the various embodiments of the apparatus as described and claimed herein are considered within the scope of the present invention, including but not limited to that:
- the selection of the letters comprises one or more selected from the list consisting of:
   i. successive evaluation of the discrimination of words in the corpus following the removal of a respective set of N candidate letters to determine a set of N letters that maintains at least a threshold level of discrimination (e.g. the least discrimination or close to the least), as described elsewhere herein;
   ii. successive evaluation of the discrimination of words in the corpus following the removal of a respective set of L<N candidate letters to determine multiple sets of L letters that maintain at least a threshold level of discrimination, and selecting the most frequent N letters occurring in those multiple sets, as described elsewhere herein; and
   iii. successive evaluation of the discrimination of words in the corpus following the removal of a respective set of N+P candidate letters to determine a set of N+P letters that maintains at least a threshold level of discrimination (e.g. the least discrimination or close to the least), and selecting N of the N+P letters based upon letter frequency in a user's text history, as described elsewhere herein.

It will be appreciated that the above methods may be carried out on hardware suitably adapted as applicable by software instruction or by the inclusion or substitution of dedicated hardware.

Thus the required adaptation to existing parts of a equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring now also to Figure 1, in a summary embodiment of the present description, an input system comprises an entertainment device 10 (for example a videogame console) comprising an input processor (for example CPU 20) configured (for example by suitable software instruction) to receive inputs from a handheld controller, as described elsewhere herein.

The input processor is configured (again for example by suitable software instruction) to map only a subset of the letters of an alphabet to respective inputs received from the handheld controller, as described elsewhere herein.

Meanwhile, the subset of letters is/was selected responsive to their ability to discriminate between words in a corpus, as described elsewhere herein.

Instances of this summary embodiment implementing the methods and techniques described herein (for example by use of suitable software instruction) are envisaged within the scope of the application, including but not limited to that:
- the subset of letters omits N letters of the alphabet, where N is chosen to accommodate at least a first non-letter input from the controller, as described elsewhere herein;
- the subset of letters omits N letters of the alphabet, where N is chosen so the subset of letters fits a predetermined number of input groups, as described elsewhere herein;
- the subset of letters omits N letters of the alphabet, where N is chosen so that 16 letters are addressable by eight respective directions of two directional input means (e.g. joysticks, joypads, or button groups), as described elsewhere herein;
- the mapping of letters to respective inputs received from the handheld controller references one or more selected from the list consisting of a keyboard layout, a discriminatory capability of the letters, a frequency of occurrence of the letters, and a frequency of pairing of letters, as described elsewhere herein;
- the mapping of letters to respective inputs comprises a first static mapping that remains the same during an input session, in combination with a second dynamic mapping that can change during an input session (e.g. so that some input remain the same whilst some are dynamic, as per Figures 6D and 7A-B), as described elsewhere herein;
   - in this case, optionally the second dynamic mapping selects one or more letters not present in the static mapping, as described elsewhere herein;
   - similarly in this case, optionally the second dynamic mapping selects one or more letters responsive to a current position within an input word, as described elsewhere herein;
   - similarly in this case, optionally the second dynamic mapping selects one or more letters responsive to their ability to distinguish between a shortlist of suggested words, as described elsewhere herein;
- the entertainment device generates a graphical user interface for output, the graphical user interface indicating the mapping between the letters and the handheld controller inputs, as described elsewhere herein;
   - in this case, optionally providing a shortlist of suggested words responsive to user input, as described elsewhere herein; and
      - in this case, optionally the entertainment device indicates letters that can uniquely discriminate suggested words within the shortlist, as described elsewhere herein;
- separate to the mapping of a subset of letters to respective inputs of the handheld controller, a mapping to one or more further respective inputs of the handheld controller comprises one or more selected from the list consisting of a delete function, a 'space' character, a letter select function, a word select function, a case select function, a subset swap function, a number swap function, and a symbol swap function, as described elsewhere herein;
- the corpus is representative of one or more selected from the list consisting of text in a language of the user, text related to use of the entertainment system, text related to a current use-case of the user, text related to a current game or game genre, and text related to an input history of the user, as described elsewhere herein;
- the system further comprises a handheld controller, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An input system, comprising:
an entertainment device comprising an input processor configured to receive inputs from a handheld controller; wherein
the input processor is configured to map only a subset of the letters of an alphabet to respective inputs received from the handheld controller; and wherein
the subset of letters was selected responsive to their ability to discriminate between words in a corpus.

2. An input system according to claim 1, in which:
the subset of letters omits N letters of the alphabet, where N is chosen to accommodate at least a first non-letter input from the controller.

3. An input system according to claim 1 or claim 2, in which:
the subset of letters omits N letters of the alphabet, where N is chosen so the subset of letters fits a predetermined number of input groups.

4. An input system according to any preceding claim, in which
the subset of letters omits N letters of the alphabet, where N is chosen so that 16 letters are addressable by eight respective directions of two directional input means.

5. An input system according to any preceding claim, in which the mapping of letters to respective inputs received from the handheld controller references one or more selected from the list consisting of:
i. a keyboard layout;
ii. a discriminatory capability of the letters;
iii. a frequency of occurrence of the letters; and
iii. a frequency of pairing of letters.

6. An input system according to any preceding claim, in which the mapping of letters to respective inputs comprises a first static mapping that remains the same during an input session, in combination with a second dynamic mapping that can change during an input session.

7. An input system according to claim 6, in which the second dynamic mapping selects one or more letters not present in the static mapping.

8. An input system according to claim 6 or claim 7, in which the second dynamic mapping selects one or more letters responsive to one or more selected from the list consisting of:
i. a current position within an input word; and
ii. their ability to distinguish between a shortlist of suggested words.

9. An input system according to any preceding claim, in which
the entertainment device generates a graphical user interface for output, the graphical user interface indicating the mapping between the letters and the handheld controller inputs, and providing a shortlist of suggested words responsive to user input; wherein
the entertainment device indicates letters that can uniquely discriminate suggested words within the shortlist.

10. An input system according to any preceding claim, in which
separate to the mapping of a subset of letters to respective inputs of the handheld controller, a mapping to one or more further respective inputs of the handheld controller comprises one or more selected from the list consisting of:
i. a delete function;
ii. a 'space' character;
iii. a letter select function;
iv. a word select function;
v. a case select function;
vi. a subset swap function;
vii. a number swap function; and
viii. a symbol swap function.

11. An input system according to any preceding claim, in which the corpus is representative of one or more selected from the list consisting of:
i. text in a language of the user;
ii. text related to use of the entertainment system;
iii. text related to a current use-case of the user;
iv. text related to a current game or game genre; and
v. text related to an input history of the user.

12. An input system according to any preceding claim, further comprising:
the handheld controller.

13. A method identifying an input, comprising:
receiving inputs from a handheld controller; and
mapping only a subset of the letters of an alphabet to respective inputs received from the handheld controller;
wherein the subset of letters is selected responsive to their ability to discriminate between words in a corpus.

14. The method of claim 13, in which
the selection of the letters comprises one or more selected from the list consisting of:
i. successive evaluation of the discrimination of words in the corpus following the removal of a respective set of N candidate letters to determine a set of N letters that maintains at least a threshold level of discrimination;
ii. successive evaluation of the discrimination of words in the corpus following the removal of a respective set of L<N candidate letters to determine multiple sets of L letters that maintain at least a threshold level of discrimination, and selecting the most frequent N letters occurring in those multiple sets; and
iii. successive evaluation of the discrimination of words in the corpus following the removal of a respective set of N+P candidate letters to determine a set of N+P letters that maintains at least a threshold level of discrimination (e.g. the least discrimination or close to the least), and selecting N of the N+P letters based upon letter frequency in a user's text history.

15. A computer program comprising computer executable instructions adapted to cause a computer system to perform the method of any one claims 13 and 14.
